# EUROPEAN PATENT APPLICATION

(11) **EP 0 687 058 A1**
(43) Date of publication of application: **13.12.1995**
(21) Application number: 95107238.8
(22) Date of filing: 12.05.1995
(51) Int. Cl.: H02M 7/217, H02M 3/337

(54) **DC/DC power converter for low output voltages**

(30) Priority: 07.06.1994 ES 9401238
(71) Applicant: ALCATEL STANDARD ELECTRICA, S.A., E-28045 Madrid (ES)
(72) Inventor: Cobos Marquez, José Antonio, E-28006 Madrid (ES); Uceda Antolin, Javier, E-28006 Madrid (ES); Sebastian Zuniga, Javier, E-33204 Gijon (Asturias) (ES); Garcia Suarez, Oscar, E-28006 Madrid (ES); Cruz Moreno, Enrique de la, E-28002 Madrid (ES)
(74) Representative: Pohl, Herbert, Dipl.-Ing.

(57) **Abstract**

Converter of particular application in DC to DC conversion for low output voltages where efficiency is affected by rectifier losses. It is also of application in AC to DC conversion.

The converter consists of a DC to AC converter that incorporates switching elements (EM), a control module (MC) that produces two mutually complementary drive control signals (Q1, Q2) which are applied, respectively, to the switching elements (EM) driving them into either conduction or cut-off and producing a pulsed current that flows through the primary of the transformer (T), thereby obtaining an alternating signal in the form of a square wave, with fast transitions and non-zero instantaneous values, that is rectified in a self-driven synchronous rectifier (M1, M2) and filtered in a filter (L, C).

## Description

### OBJECT OF THE INVENTION

This invention concerns a DC/DC power converter that offers improved efficiency during the DC/DC power conversion through reduction of the losses in the rectification of an alternating current signal.

The converter according to the invention is of particular application in DC/DC conversion for low output voltages where the power efficiency is seriously affected by rectification losses. It is also of application for AC/DC conversion.

### BACKGROUND TO THE INVENTION

The main objective in the design of high power density and low output voltage converters, for printed circuit boards, is achieving high efficiency and reduced size. In DC/DC conversion, the power loss of greatest impact is that occurring in the rectification process.

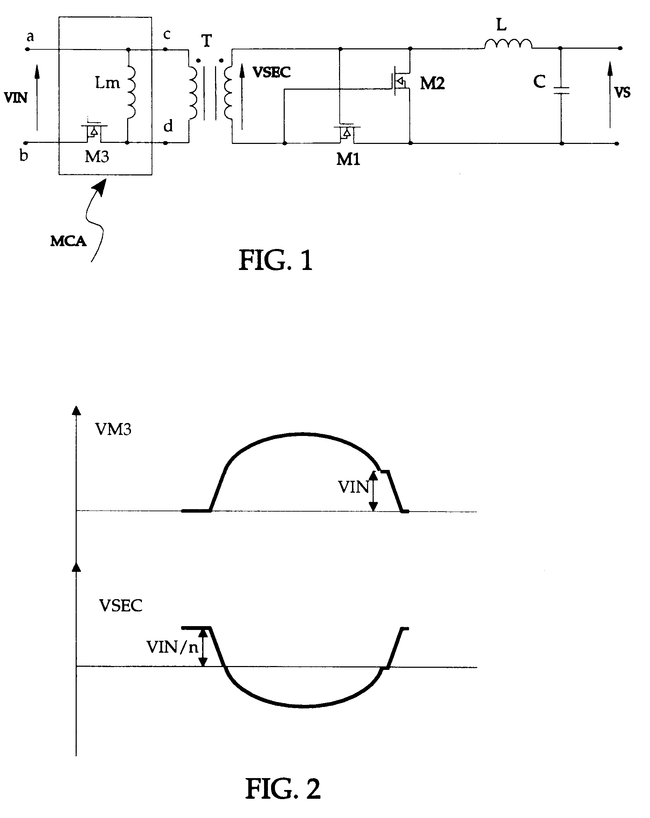

In the article by J.A. Cobos, O. García, J. Sebastián and J. Uceda, "Resonant Reset Forward Topologies for Low Output Voltage on Board Converters", IEEE 9th Applied Power Electronics Conference (APEC), Orlando, USA, February 13th to 17th, 1994, pages 703 to 708, a description is given of how to obtain improved efficiency in self-driven synchronous rectification through optimisation of the alternating signal in the secondary of the transformer, termed secondary, by applying a Forward PWM topology with self-driven synchronous rectification, as can be seen in figure 1 of the article mentioned.

When the field-effect transistor (MOSFET) on the primary winding of the transformer is made to switch alternately between cut-off and conduction by means of a signal coming from a control circuit which is applied to the gate of this MOSFET, a pulsed current is produced through the primary of the transformer in question, such that in the secondary of this transformer an alternating voltage is produced which is rectified by the self-driven synchronous rectifier connected to it.

The waveform of this alternating voltage signal has a direct relationship with the drain-to-source voltage of the MOSFET of the primary winding: thus during the time that the MOSFET is conducting, energy is stored in the magnetic inductance that is in parallel with the primary; however, when the MOSFET passes to cut-off, the drain-to-source voltage rises rapidly increasing the current flow due to the resonant circuit that is formed by the magnetic inductance, the MOSFET parasitic capacitance, and the parasitic capacitance of the synchronous rectifier on the secondary winding; in this way the transformer losses increase. When the drain-to-source voltage of the MOSFET reaches the value of the input voltage, it starts to decrease because one of the MOSFETs of the synchronous rectifier conducts. No other variation occurs in the secondary voltage until the MOSFET of the primary passes once again to the cut-off state.

Figure 2 shows the relation between the waveform of the drain-to-source voltage signal of the MOSFET and the alternating voltage signal in the secondary.

This implementation presents a lower efficiency because rectification is not optimised as zero values are reached by the secondary alternating voltage signal, and also because there is an increase in losses in the transformer due to the current flowing through the resonant circuit that is established when the MOSFET is in the cut-off state, since the magnetic inductance value has to be low for the alternating signal in the secondary to be at zero level for the least time possible. Consequently the overall efficiency of the assembly decreases.

### TECHNICAL PROBLEM TO BE RESOLVED

As a result, the technical problem to be resolved consists in obtaining in the secondary of the transformer an alternating voltage signal in the form of a square wave, which has appropriate levels, fast transitions and non-zero instantaneous values that allow the self-driven synchronous rectifier to work in optimum conditions and, additionally, reduce the losses on the primary winding of the transformer by reducing the amount of current flow.

### CHARACTERISATION OF THE INVENTION

The DC/DC converter of the invention consists of a direct current to alternating current conversion module that incorporates switching elements that cause it to switch alternately between conduction and cut-off by means of two mutually complementary drive control signals, generated in a control module, giving rise to a pulsating current in the primary of the transformer. Because of this there appears, in the secondary of the transformer, an alternating voltage signal with a controlled square waveform and with non-zero instantaneous values. The alternating signal is rectified in a self-driven synchronous rectifier and smoothed in an output filter.

The two drive control signals, generated by the control module, are applied, respectively, to the switching elements.

The input voltage signal to the DC/AC conversion module is preceded by a pre-regulator that stabilises its own stable voltage signal because it receives, in the form of feedback, the output voltage signal from the DC/DC converter after filtering in the output filter; consequently oscillations in the input signal to the DC/AC converter are suppressed. Because of this and the improvement in the waveform of the alternating voltage signal, which has an appropriate voltage level, fast transitions and non-zero instantaneous values, the losses in the self-driven synchronous rectification are reduced.

Moreover, through the control of the input voltage signal to the DC/AC converter and the periods of cut-off and conduction of the switching elements, the losses resulting in this conversion as well as in the transformer are reduced, whereby a DC/DC power converter is obtained that offers a greater overall efficiency.

### BRIEF FOOTNOTES TO THE FIGURES

A fuller explanation of the invention is provided in the description below, based on the attached figures in which:
- figure 1 is a diagram of a DC/DC converter with self-driven synchronous rectification according to the prior art,
- figure 2 shows the waveforms of voltage signals taken at different points of the converter according to the prior art,
- figure 3 shows the block diagram of the DC/DC converter according to the invention,
- figure 4 shows the waveforms of the drive control signals and the alternating signal that is obtained in the secondary of the transformer,
- figure 5 shows an implementation of the DC/DC converter according to the invention,
- figure 6 shows the configuration of a bridge DC/AC converter, and
- figure 7 shows the configuration of push-pull DC/AC converter.

### DESCRIPTION OF THE INVENTION

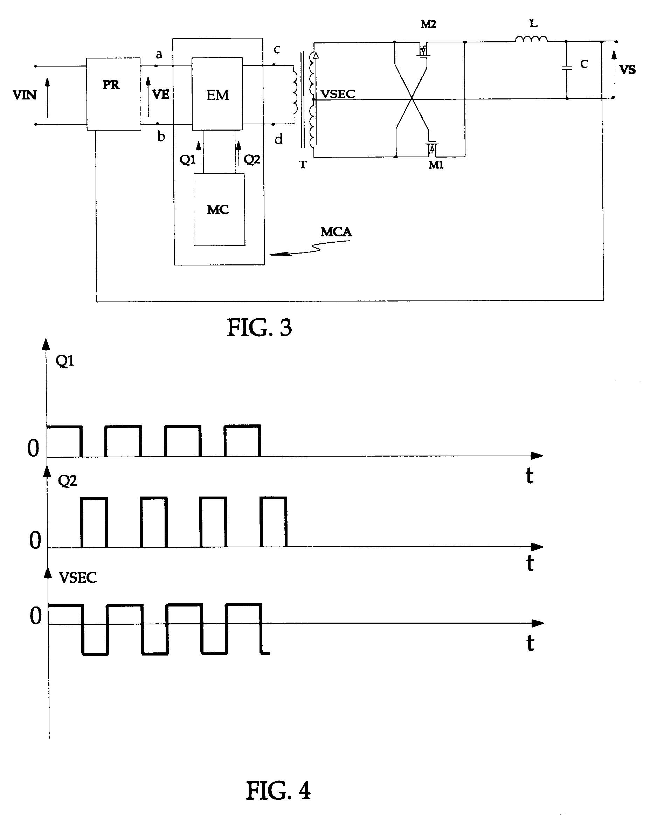

The DC/DC converter of the invention (see figure 3) comprises a pre-regulator PR that receives an input voltage signal VIN and produces a constant output voltage signal VE across the input nodes a, b of the DC/AC converter MCA. This converter MCA incorporates switching elements EM that are switched alternately between cut-off and conduction by mutually complementary drive control signals Q1, Q2 with a square waveform, produced in the control module MC, which are applied, respectively, to the switching elements EM.

The switching of the switching elements between cut-off and conduction generates a pulsating current that flows through the primary of the transformer T, which is connected to the output nodes c, d of the converter MCA, resulting in the appearance of an alternating voltage signal VSEC in the secondary of this transformer T, which is rectified by a self-driven synchronous rectifier circuit M1, M2. The rectified signal is filtered by a filter L, C in order to produce at its output the DC voltage VS required by the printed circuit board.

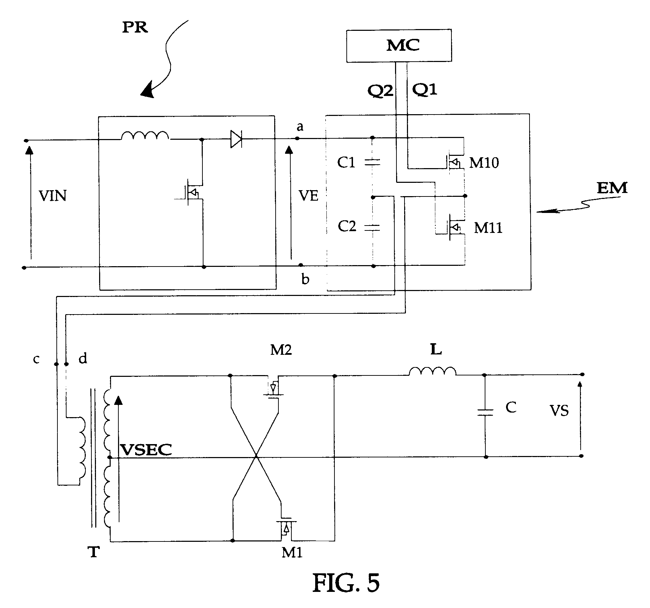

Figure 5 shows a possible arrangement of the field-efect transistors M10, M11 that constitute the switching elements EM. One of the MOSFET transistors M10 has the input nodes connected to the drain, its gate receives one of the drive control signals Q1, and its source is connected to the drain of the other MOSFET transistor M11 which, in turn, has its source connected to the other input node b and its gate receives the other drive control signal Q2. In addition, there are two capacitors C1, C2 connected in series, so that the whole assembly is connected between the two input nodes a, b. This configuration is termed a half-bridge.

The control signals Q1, Q2 bring the MOSFET transistors M10, M11 into conduction with their high level and cut them off with their low level. The MOSFET transistors M10, M11 are never simultaneously cut off or in the conductive state because when one of the control signals Q1, Q2 is at its high level, the other is at its low level. In this way a current is produced that alternates in the primary of the transformer T giving rise to an alternating voltage signal VSEC in the secondary winding. Figure 4 shows the signals Q1,Q2 and VSEC.

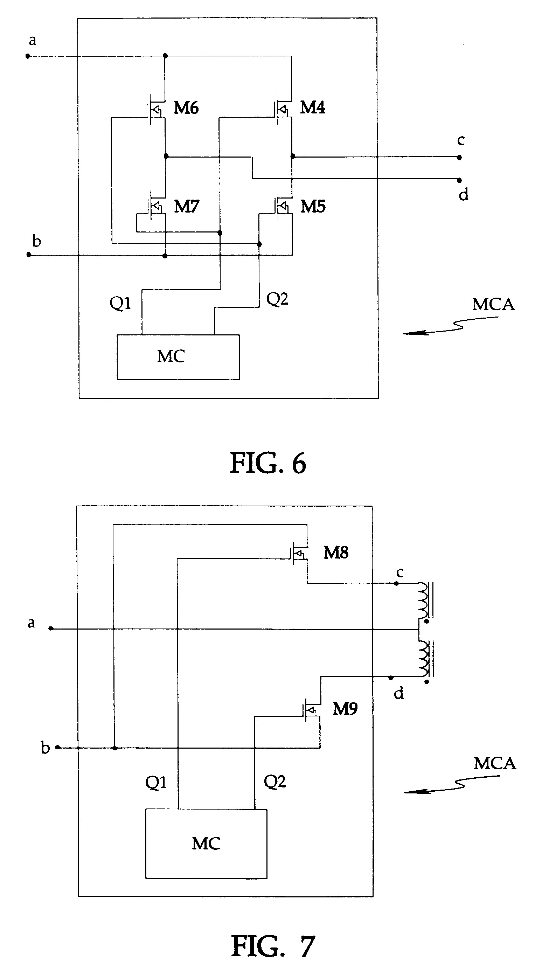

In figure 6 it can be seen another configuration of the switching elements consisting of four MOSFET transistors M4, M5, M6 and M7, in which the drains of MOSFET transistors M4, M6 are connected to input node a, their sources are connected, respectively, to the drains of the other two MOSFET transistors M5, M7 which, in turn, have their sources connected to the input node b. This configuration is termed a bridge.

The control signal Q1 is applied to the gates of one of the MOSFET transistor pair M4, M7, which are situated at opposing branches of the bridge configuration, resulting in these being simultaneously cut off with their low level and in the conductive state with their high level and, in like manner, the control signal Q2 is applied to the gates of the other MOSFET transistor pair M5, M6, located in the other mutually opposing branches of this configuration, causing them to switch between the cut-off and the conducting states. When one of the two MOSFET transistor pair M4, M5, M6 and M7 is in the cut-off state the other MOSFET transistor pair is in the state of conduction, whereby a pulsating current is produced that flows through the primary of the transformer T obtaining in the secondary the alternating voltage signal VSEC.

In figure 7 it can be seen an alternative arrangement of the switching elements EM, consisting of two MOSFET transistors M8, M9, in which the drain of one of these transistors M8 and the source of the other transistor M9 are connected to the input node b, the source of the first of these transistors M8 is connected to one of the output nodes c and the drain of the second MOSFET transistor M9 is connected to the other output node d. This configuration is termed push-pull.

One of the control signals Q1 is applied to the gate of one of the MOSFET transistors M8 and the second control signal Q2 is applied to the gate of the other MOSFET transistor M9. Just as in the other configurations, these switching elements EM produce a pulsating current that flows through the primary of the transformer T, resulting in the alternating voltage signal VSEC in the secondary.

According to the invention, a signal VSEC is obtained with a square waveform, fast transitions and non-zero instantaneous values by controlling the switching of the MOSFET transistors M10, M11 by means of the drive signals Q1, Q2, whereby less losses result in the process of rectification.

If the input voltage signal VE to the converter MCA has a constant value and, consequently, has no oscillations, the efficiency of this converter MCA is improved. To achieve this, a pre-regulator PR is connected at the input nodes a, b which stabilises its own stable output voltage VE by receiving as feedback the output signal VS of the DC/DC converter after having been filtered in the filter L, C. Consequently the DC/DC converter presents a better overall efficiency.

## Claims

1. **DC/DC POWER CONVERTER** which produces a steady and controlled output voltage signal (VS) and consists of a DC/AC current converter (MCA), a transformer (T), a self-driven synchronous rectifier (M1, M2), and a filter (L, C), **characterised** in that the DC/AC conversion module (MCA) also includes means of control (MC) that generate two mutually complementary drive control signals (Q1, Q2), that are applied respectively to switching elements (EM) that permit the flow of electric current through the primary of the transformer (T) in one direction when one of the drive control signals (Q1) is active and in the other direction when it is the other drive control signal (Q2) that is active.

2. **DC/DC POWER CONVERTER** according to claim 1, **characterised** in that the switching elements (EM), consists of four field-effect transistors, MOSFETs, (M4, M5, M6, M7) mounted in a bridge configuration, in which the drains of two of the transistors (M4, M6) are connected to one of the input nodes (a), their sources are connected respectively to the drains of the other two transistors (M5, M7), which in turn have their sources connected to the other input node (b); and in that one of the drive control signals (Q1) is applied to the gates of one of the transistor pair (M4, M7) that are situated at opposing branches of the bridge configuration and the other drive control signal (Q2) is applied to the gates of the other transistor pair (M5, M6) situated in the other opposing branches of the bridge configuration.

3. **DC/DC POWER CONVERTER** according to claim 1, **characterised** in that the switching elements (EM) consist of two MOSFET transistors (M10, M11) mounted in a half-bridge configuration, in which the drain of one of the transistors (M10) is connected to one of the input nodes (a), its gate receives one of the drive control signals (Q1) and its source is connected to the drain of the other MOSFET transistor (M11) which in turn has its source connected to the other input node (b) and its gate receives the other drive control signal (Q2); and in that it also includes two capacitors (C1, C2) connected in series, in such a way that the whole assembly is connected between the two input nodes (a, b).

4. **DC/DC POWER CONVERTER** according to claim 1, **characterised** in that the switching elements (EM) consist of two MOSFET transistors (M8, M9) mounted in a push-pull configuration, in which the drain of one of the transistors (M8) and the source of the other transistor (M9) are connected to one of the input nodes (b), the source of the first transistor (M8) is connected to one of the output nodes (c) and the drain of the second MOSFET transistor (M9) is connected to the other output node (d) and in which one of the drive control signals (Q1) is applied to the gate of one of the MOSFET transistors (M8) and the other drive control signal (Q2) is applied to the gate of the other MOSFET transistor (M9); and in that the other input node (a) is connected to an intermediate tap on the primary winding of the transformer (T).

5. **DC/DC POWER CONVERTER** according to claim 1, **characterised** in that the input voltage signal (VE) to the DC/AC conversion module (MCA) comes from a power pre-regulator module (PR) that generates a stable output voltage signal (VE).

6. **DC/DC POWER CONVERTER** according to claim 5, **characterised** in that the pre-regulator (PR), in order to stabilise its own stable output voltage signal (VE), receives as feedback the output signal (VS) from the DC/DC power converter.
